# EUROPÄISCHE PATENTANMELDUNG

(11) **EP 4 635 856 A1**
(43) Veröffentlichungstag der Anmeldung: **22.10.2025**
(21) Anmeldenummer: 25171055.4
(22) Anmeldetag: 16.04.2025
(51) Int. Cl.: B64F 5/60, B64F 5/40, B64U 101/26, B64U 101/29

(54) **VERFAHREN ZUR INSPEKTION EINES FLUGZEUGS UND SYSTEM**

(30) Priorität: 16.04.2024 DE 102024110611
(71) Anmelder: Deutsche Post AG, 53113 Bonn (DE)
(72) Erfinder: Meiner, Hendrik, 04356 Leipzig (DE); Streicher, Benedikt, 04317 Leipzig (DE)
(74) Vertreter: Michalski Hüttermann & Partner Patentanwälte mbB

(57) **Zusammenfassung**

Die Erfindung betrifft ein Computerimplementiertes Verfahren zur Inspektion eines Flugzeugs (1), umfassend
Betreiben (20) eines unbemannten Luftfahrzeugs (100) im Bereich des Flugzeugs (1), und während des Betreibens (20)
Erfassen (25) von Messdaten des Flugzeugs (1) durch eine Sensorik (102) des unbemannten Luftfahrzeugs (100),
Senden (30) der Messdaten an eine von dem unbemannten Luftfahrzeug (100) separate Computereinrichtung (3) mittels eines drahtlosen Kommunikationsverfahrens, und
Detektieren (35) wenigstens einer Schadensstelle (2) des Flugzeugs (1) auf Grundlage der Messdaten.

## Beschreibung

Die Erfindung betrifft ein Verfahren zur Inspektion eines Flugzeugs, umfassend ein Betreiben eines unbemannten Luftfahrzeugs im Bereich des Luftfahrzeugs und ein Detektieren einer Schadensstelle des Flugzeugs. Die Erfindung betrifft ferner ein System.

Im Betrieb eines Flugzeugs kann es zu Schäden am Flugzeug kommen. Beispielsweise können Schäden durch Vogelschlag, Blitzeinschläge, Überbeanspruchung und/oder durch Materialermüdung am Flugzeug auftreten. Solche Schäden sind beispielsweise durch geschultes Personal erkennbar. Es ist auch bekannt, Drohnen mit Kameras einzusetzen, um Flugzeuge zu inspizieren. Schäden werden in Inspektionen erkannt bzw. erfasst, um diese dann zu beheben. Die aus dem Stand der Technik bekannten Systeme oder Verfahren zur Inspektion eines Flugzeugs sind wenig automatisiert und fehleranfällig bzw. anfällig für Störungen. Außerdem entstehen hohe Kosten zur Durchführung von Inspektionen.

Davon ausgehend ist es die Aufgabe der Erfindung, Lösungen bereitzustellen, mit denen die Inspektion eines Flugzeugs besser gelingt. Die Inspektion eines Flugzeugs soll schneller abgewickelt werden können, weniger fehleranfällig sein und kostengünstiger, insbesondere an Flughäfen, abgewickelt werden können. Insbesondere ist es eine Aufgabe der Erfindungen, Nachteile des Standes der Technik zu vermeiden oder aber zumindest im Wesentlichen zu reduzieren.

Diese Aufgabe wird durch den Gegenstand der unabhängigen Patentansprüche gelöst. Bevorzugte Weiterbildungen der Erfindung finden sich in den Unteransprüchen.

Vorgeschlagen wird ein Verfahren zur Inspektion eines Flugzeugs, umfassend
Betreiben eines unbemannten Luftfahrzeugs im Bereich des Flugzeugs, insbesondere wobei das unbemannte Luftfahrzeug eine auf das Flugzeug bezogene Flugbahn verfolgt,
Erfassen von Messdaten des Flugzeugs durch eine Sensorik des unbemannten Luftfahrzeugs,
Senden der Messdaten an eine von dem unbemannten Luftfahrzeug separate Computereinrichtung mittels eines drahtlosen Kommunikationsverfahrens bzw. einer drahtlosen Kommunikationstechnologie, beispielsweise LTE, 4G, 5G, zukünftige Weiterentwickelte Mobilfunkstandards und/oder WLAN, und
Detektieren wenigstens einer Schadensstelle des Flugzeugs auf Grundlage der Messdaten. Es wird vorgeschlagen, dass es sich um ein insbesondere wenigstens teilweise computerimplementiertes Verfahren handelt.

Anders gesagt, beispielsweise, wird ein Verfahren angegeben, mit dem ein Flugzeug auf Schäden hin untersucht werden kann, wobei ein unbemanntes Luftfahrzeug, z.B. eine Drohne, um das Flugzeug herum geflogen wird, wobei - typischerweise währenddessen - Messdaten über das Flugzeug durch eine Sensorik der Drohne erzeugt bzw. erhalten werden, und wobei - währenddessen oder danach - die Messdaten kabellos an einen von der Drohne beabstandeten Computer gesendet werden, und wobei - währenddessen oder danach - etwaige Schäden am Flugzeug anhand der Messdaten erkannt werden. Die Schäden kann beispielsweise die Drohne selbst oder auch der Computer erkennen. Bevorzugt werden die Schäden in Echtzeit, also noch im Flug der Drohne, erkannt.

Typischerweise findet das Erfassen während des Betreibens statt. Vorzugsweise findet das Senden während des Betreibens statt. Vorzugsweise findet das Detektieren während des Betreibens statt. Es ist aber auch möglich, dass das Senden und/oder das Detektieren zu einem späteren Zeitpunkt bzw. nach dem Betreiben durchgeführt wird/werden, beispielsweise wenn das drahtlose Kommunikationsverfahren nur unzureichend mit der Computereinrichtung kommunizieren kann. Es kann, optional, das Detektieren während des Betreibens stattfinden, insbesondere mittels des unbemannten Luftfahrzeugs.

Beispielsweise bewegt sich die Drohne beim Erfassen, beispielsweise um den störenden Einfluss von Reflexionen auf der Oberfläche des Flugzeugs minimieren zu können bzw. diese als solche erkennen zu können. Insbesondere ist vorgesehen, dass die Messdaten vom unbemannten Luftfahrzeug an die Computereinrichtung gesendet werden, während das unbemannte Luftfahrzeug betrieben wird und/oder sich bewegt. Ebenso soll das Detektieren im Betrieb erfolgen. Das Verfahren schafft eine hohe Geschwindigkeit in der Detektion der Schadensstelle. Es ist eine Live bzw. Echtzeit-Erkennung von Schadensstellen möglich.

Unter der Inspektion eines Flugzeugs ist beispielsweise allgemein das Aufnehmen und Beurteilen eines technischen Zustands des Flugzeugs zu verstehen. Unter die Inspektion, wie sie bei der Erfindung vorgesehen ist, fällt optional die Wartung nach Herstellervorgaben/ Qualitätsmerkmalen und/oder Vorgaben von Luftfahrbehörden, Verbänden und Organisationen, die Reinigung und/oder die Reparatur des Flugzeugs.

Unter dem Betreiben des unbemannten Luftfahrzeugs im Bereich des Flugzeugs ist insbesondere zu verstehen, dass das unbemannte Luftfahrzeug am Flugzeug entlang fliegt und/oder in der Nähe des Flugzeugs fliegt. Insbesondere hält das unbemannte Luftfahrzeug einen ausreichenden Sicherheitsabstand zum Luftfahrzeug ein. Beispielsweise sieht das Betreiben vor, dass das Luftfahrzeug im Abstand von höchstens 10 m, vorzugsweise höchstens 7,5 m oder höchstens 5 m vom Flugzeug beabstandet betrieben wird. Beispielsweise kann das Luftfahrzeug im Abstand von höchstens 3 m, vorzugsweise höchstens 2 m, weiter vorzugsweise höchstens 1 m, insbesondere höchstens 0,5 m, vom Flugzeug beabstandet betrieben werden. Zum Betreiben kann auch ein Starten bzw. Abheben und/oder ein Landen sowie Steuern des unbemannten Luftfahrzeugs gehören.

Bei dem unbemannten Luftfahrzeug handelt es sich insbesondere um eine Drohne und/oder einen Helikopter ohne Besatzung bzw. ohne Passagier bzw. ein Multirotor oder Multicopter oder ein Quadrocopter oder Quadrokopter, auch Quadrocopter, Quadrotor oder Schwebeplattform genannt. Die Drohne weist vorteilhaft wenigstens einen, zwei, drei, vier oder mehr Auftrieb bereitstellende und/oder unabhängig voneinander betreibbare Rotoren als Antrieb auf. Das unbemannte Luftfahrzeug ist typischerweise elektrisch betrieben. Es sind aber auch andere Antriebsarten für das unbemannte Luftfahrzeug möglich. Bspw. kann ein Verbrennermotor oder Brennstoffzellenantrieb vorgesehen sein. Das unbemannte Luftfahrzeug hat vorzugsweise einen insbesondere elektrischen Energiespeicher, welcher beispielsweise von allen Antriebsarten versorgt werden kann und/oder diese versorgen kann. Der elektrische Energiespeicher ist vorteilhaft zum Speisen der Sensorik mit elektrischer Energie vorgesehen. Das unbemannte Luftfahrzeug weist typischerweise einen Steuerungscomputer zur Steuerung eines/des Antriebs des unbemannten Luftfahrzeugs und/oder der Sensorik auf. Der Steuerungscomputer kann zum Senden und/oder zum Detektieren ausgebildet sein. Der Steuerungscomputer bzw. das unbemannte Luftfahrzeug kann das Verfahren wenigstens teilweise durchführen.

Das Erfassen von Messdaten des Flugzeugs bezieht sich insbesondere auf ein Aufnehmen des technischen Zustands des Flugzeugs in Form der Messdaten. Die Messdaten beziehen sich also auf das Flugzeug und enthalten zumindest mittelbar und/oder teilweise Informationen über den Zustand des Flugzeugs. Anders gesagt stellen die Messdaten eine Aufzeichnung hinsichtlich Aspekten des Zustands des Flugzeugs bereit. Die Messdaten beinhalten regelmäßig Positionsdaten, Bilddateien, Umweltparameter, Geschwindigkeitsdaten, Geometriedaten, Wetterdaten, Zeitdaten, Videodaten, Audiodaten und/oder dergleichen. Nicht alle Messdaten bzw. alle Teile der Messdaten müssen sich auf das Flugzeug und/oder die Schadensstelle beziehen. So können die Messdaten auch Informationen zum unbemannten Luftfahrzeug, beispielsweise zur verwendeten Sensorik, zu dessen Position und/oder Geschwindigkeit oder dergleichen, aufweisen.

Insbesondere stellt die Sensorik die physikalische Grundlage für das Erfassen bereit. In einem exemplarischen Fall weist die Sensorik eine Kamera auf und kann damit Bilddateien und/oder Videodaten des Flugzeugs bzw. über das Flugzeug erfassen. Die Sensorik kann Einrichtungen zur Abbildung verschiedener physikalischer Messprinzipien für das Erfassen aufweisen. Die Sensorik kann mit einem/dem Steuerungscomputer gekoppelt sein. Die Sensorik kann zum Durchführen von Frequenzmessungen ausgebildet sein und/oder einen Noise-Sensor aufweisen.

Das Senden der Messdaten umfasst alle Messdaten oder Teile der Messdaten. Das Senden kann vorteilhaft in Echtzeit während des Betreibens erfolgen. Das Senden umfasst optional das Senden der wenigstens einen Schadensstelle, beispielsweise wenn der Schritt Detektieren (zumindest teilweise oder zeitweise) von dem unbemannten Luftfahrzeug durchgeführt wird. Das Senden wird regelmäßig vom unbemannten Luftfahrzeug selbst, insbesondere einem/dem Steuerungscomputer bzw. einer Computereinrichtung des unbemannten Luftfahrzeugs, durchgeführt. Das Senden impliziert ein Empfangen. Das Empfangen wird insbesondere von der Computereinrichtung durchgeführt. Die Computereinrichtung und das unbemannte Luftfahrzeug können durch das Senden insbesondere zumindest unidirektional miteinander kommunizieren. Mehrere unbemannte Luftfahrzeuge können auch untereinande im Verband Daten senden und/oder empfangen. Ebenso kann jedes Luftfahrzeug an eine eigene Computereinrichtung senden und/oder von dieser empfangen bzw. können die Computereinrichtungen untereinander verbunden sein und senden und empfangen. Die Computereinrichtungen können auch räumlich voneinander getrennt sein.

Die von dem unbemannten Luftfahrzeug separate Computereinrichtung ist insbesondere als Steuerzentrale und/oder Fernbedienung für das unbemannte Luftfahrzeug zu verstehen. Die Computereinrichtung kann einen oder mehrere, insbesondere alle, Verfahrensschritte wenigstens teilweise auslösen, steuern, ausführen, initiieren und/oder überwachen. Die Computereinrichtung kann cloudbasiert bereitgestellt sein. Insbesondere ist die Computereinrichtung räumlich von dem unbemannten Luftfahrzeug getrennt bzw. zumindest während des Betreibens von diesem beabstandet. Nicht ausgeschlossen ist insbesondere, dass das unbemannte Luftfahrzeug eine Computereinrichtung bzw. einen Steuerungscomputer aufweist, beispielsweise um die Messdaten zwischenzuspeichern und/oder zu verarbeiten. Die Computereinrichtung kann eine Datenbank für die Messdaten und/oder die wenigstens eine Schadensstelle bereitstellen. Die Computereinrichtung kann eine Fernsteuerung für das unbemannte Luftfahrzeug, für ein weiteres unbemanntes Luftfahrzeug und/oder für mehrere (weitere) unbemannte Luftfahrzeuge aufweisen, bereitstellen oder mit einer solchen verbindbar sein.

Es kann eine zur Computereinrichtung zugehörige Fernsteuerung vorgesehen sein, die zum Fernsteuern des unbemannten Luftfahrzeugs ausgebildet ist, beispielsweise für einen Notbetrieb und/oder zum manuellen Steuern. Die Fernsteuerung ist vorteilhaft zum händischen Bedienen ausgebildet.

Einen eigenständigen Aspekt der Erfindung kann darstellen, dass die Computereinrichtung mit ihren Funktionalitäten vollständig oder auch teilweise bzw. partiell auf dem unbemannten Luftfahrzeug ausgeführt wird bzw. von dem unbemannten Luftfahrzeug bereitgestellt wird. Insbesondere kann vorgesehen sein, dass eine/die Computereinrichtung nicht von dem unbemannten Luftfahrzeug separat bereitgestellt ist, sondern ein Bestandteil des unbemannten Luftfahrzeugs ist. Insoweit kann das unbemannte Luftfahrzeug selbst das Senden und/oder das Detektieren und/oder andere Schritte ausführen. Das Senden der Messdaten kann möglicherweise auch kabelgebunden, insbesondere innerhalb des unbemannten Luftfahrzeugs und/oder nicht mittels des drahtlosen Kommunikationsverfahrens und/oder, erfolgen.

Das drahtlose bzw. kabellose Kommunikationsverfahren kann eine Technologie zur Datenübertragung bereitstellen bzw. umsetzen. Exemplarisch kann hier WLAN bzw. WiFi, Bluetooth oder ein Mobilfunkstandard wie 4G, LTE und/oder 5G sowie ein zukünftiger weiterentwickelte Mobilfunkstandard genannt werden. So können Daten wie die Messdaten und/oder Informationen zur Schadensstelle rasch an die Computereinrichtung gesendet werden und/oder Befehle von dem unbemannten Luftfahrzeug rasch empfangen werden. Das unbemannte Luftfahrzeug und die Computereinrichtung sind vorteilhaft zur Ausführung des Kommunikationsverfahrens bzw. zur kabellosen Kommunikation miteinander ausgebildet.

Das Detektieren der wenigstens einen Schadensstelle des Flugzeugs auf Grundlage der Messdaten betrifft insbesondere das Auswerten der Messdaten, um Schäden des Flugzeugs zu identifizieren bzw. zu verorten. Während das Erfassen beispielsweise Rohdaten bereitstellt, stellt das Detektieren beispielsweise eine Auswertung der Rohdaten bereit, die Hinweise auf die Schäden des Flugzeugs gibt.

Die Sensorik kann einen Ortungssensor, eine Kamera, einen Lidar-Sensor und/oder einen 3D-Sensor aufweisen. Vorteilhaft sind zumindest der Ortungssensor und die Kamera, und zusätzlich der Lidar-Sensor und/oder der 3D-Sensor vorgesehen. Der Ortungssensor kann die Position des unbemannten Luftfahrzeugs in GPS-Koordinaten und/oder bezüglich des Flugzeugs bereitstellen. Mittels vom Ortungssensor bereitgestellter Daten kann eine jeweilige Schadensstelle in Bezug auf das Flugzeug lokalisiert werden. Die Kamera kann Bilddaten und/oder Videodaten bereitstellen. Die Kamera kann eine Beleuchtung zum Anleuchten des Flugzeugs aufweisen. Der Lidar-Sensor ist die Abkürzung für einen "Light, Detection and Ranging"-Sensor. Der Lidar-Sensor ist eingerichtet zur optischen Abstands- und Geschwindigkeitsmessung und/oder zur Fernmessung atmosphärischer Parameter. Der Lidar-Sensor kann dreidimensionales Laserscanning durchführen. Der 3D-Sensor kann als Laserscanning-Sensor ausgebildet sein, ähnlich zum Lidar-Sensor. Der 3D-Sensor kann als SMAT-3D-Sensor ausgebildet sein. SMAT steht für Structured-Light Modulation Analysis Technique, also strukturierte Licht-Modulations-Analysetechnik.

Dabei kann ein Laserbild bzw. eine Lichtbildstruktur auf eine Oberfläche, insbesondere das Flugzeug, gesendet werden, um störende Reflexionen damit eliminieren, erkennen und/oder herausrechnen zu können. Die Sensorik kann auch zur Spektroskopie und/oder laserbasierten Materialanalyse ausgebildet sein. Mit der Sensorik kann insgesamt ein umfassendes digitales Abbild vom Flugzeug in den Messdaten bereitgestellt werden, um daraus zuverlässig die (wenigstens eine) Schadenstelle zu detektieren.

Das Detektieren kann wenigstens teilweise durch das unbemannte Luftfahrzeug durchgeführt werden. Insoweit ist vorgesehen, Rechenleistung teilweise - oder auch vollständig - durch das Luftfahrzeug bereitzustellen, um die Schadensstelle zu erkennen bzw. zu detektieren. Beispielsweise wenn das drahtlose Kommunikationsverfahren eine nur unzureichende Verbindung zur Computereinrichtung bereitstellt oder die Verbindung erst an einem anderen Standort als am Flugzeug selbst bereitstellt, findet diese Ausgestaltung vorteilhafte Anwendung. Die Schritte des Verfahrens können, müssen aber nicht, chronologisch bzw. in der angegebenen Reihenfolge durchgeführt werden. So kann insbesondere das Detektieren vor dem Senden erfolgen, beispielsweise durch das Luftfahrzeug, und bei dem Senden kann vorgesehen sein, neben den Messdaten die vom Luftfahrzeug detektierte Schadensstelle an die Computereinrichtung zu senden. Insoweit ist eine Arbeitsteilung möglich, beispielsweise um bei schlechter Verbindung mittels des Kommunikationsverfahrens das Detektieren zeitnah (insbesondere nahezu in Echtzeit) durchführen zu können.

Es kann vorgesehen sein, dass das unbemannte Luftfahrzeug und die Computereinrichtung zumindest mittelbar zur bidirektionalen Kommunikation miteinander mittels des drahtlosen Kommunikationsverfahrens ausgebildet sind. Insoweit ist nicht nur vorgesehen, dass das unbemannte Luftfahrzeug an die Computereinrichtung sendet, sondern auch, dass die Computereinrichtung an das unbemannte Luftfahrzeug sendet. Es kann ein beidseitiger Datenaustausch stattfinden, insbesondere während des Betreibens.

Es ist möglich, dass die Messdaten verschlüsselt und entschlüsselt werden. Es kann ein Verschlüsseln der Messdaten vor dem Senden durch das unbemannte Luftfahrzeug und insbesondere ein Entschlüsseln der Messdaten nach dem Senden durch die Computereinrichtung vorgesehen sein. Damit wird eine Abhörsicherheit geschaffen.

Das Luftfahrzeug und/oder die Computereinrichtung kann/können einen Algorithmus und/oder eine mathematische Funktion für das Detektieren bereitstellen. Der Algorithmus kann beispielsweise mit den Messdaten gespeist werden und daraus die wenigstens eine Schadensstelle herleiten bzw. berechnen. Der Algorithmus kann an das jeweilige Flugzeug angepasst sein. Der Algorithmus kann auf normierte Messdaten und/oder vorbekannte Messdaten zugreifen, beispielsweise um für das Detektieren die Messdaten mit den normierten Messdaten zu vergleichen. Normierte Messdaten umfassen beispielsweise Messdaten zu typischen Schadensstellen, insbesondere unabhängig vom jeweiligen Flugzeug, beispielsweise Dellen in der Außenhaut eines Flugzeugs, die durch Vogelschlag hervorgerufen wurden. Vorbekannte Messdaten beziehen sich z.B. auf das Flugzeug und/oder das gleiche Flugzeugmuster. Vorbekannte Messdaten umfassen z.B. eine Schadenshistorie bzw. Zustandshistorie des Flugzeugs.

Das Detektieren kann mithilfe von Prinzipien künstlicher Intelligenz (KI) bzw. einem darauf basierenden Algorithmus oder mehreren Algorithmen geschehen. Das Detektieren kann Machine Learning Algorithmen und/oder Deep Learning Algorithmen und/oder der Verwendung eines künstlichen neuronalen Netzes durchgeführt werden, bevorzugt das mit Referenzdaten zu dem Flugzeug, insbesondere das mit (den) normierten Messdaten und/oder (den) vorbekannten Messdaten, trainiert worden ist. Mittels des neuronalen Netzes bzw. Prinzipien künstlicher Intelligenz (KI) kann der Algorithmus selbstlernend ausgebildet sein. Es können bei ausreichendem Training auch neue, bislang unbekannte Arten von Schadensstellen automatisch erkannt werden.

Das Detektieren kann in wenigstens zwei Detektionssystematiken eingeteilt werden, aufweisend eine erste Systematik, bei der ein Algorithmus ohne Prinzipien künstlicher Intelligenz, z.B. ohne neuronales Netz, verwendet wird, und eine zweite Systematik, bei der ein Algorithmus mit einem entsprechenden Algorithmus, z.B. dem neuronalen Netz, verwendet wird. Die damit detektieren Schadensstellen werden bevorzugt im Hinblick auf die Verwendung der ersten oder zweiten Systematik klassifiziert, so dass erkannt werden kann, ob eine detektierte Schadensstelle KI-basiert oder nicht KI-basiert erkannt worden ist. So kann im Direktvergleich aller Schadensstellen der ersten und zweiten Systematik die Zuverlässigkeit des neuronalen Netzes bzw. der angewandten KI-Algorithmen geprüft werden, um fehlerhaften Detektionen durch Anpassen des Algorithmus entgegenwirken zu können und ebenso um den Algorithmus weiterzuentwickeln bzw. zu trainieren.

Das Detektieren kann einen Vergleich der Messdaten mit (den) vorbekannten Messdaten über das Flugzeug umfassen, um bei einer Abweichung (z.B. zwischen den Messdaten und den vorbekannten Messdaten oder den normierten Messdaten) die Schadenstelle zu identifizieren. Die vorbekannten Messdaten beziehen sich dabei bevorzugt auf genau dasselbe Flugzeug, wie dasjenige, das erfasst wurde, oder zumindest auf das gleiche Flugzeugmuster, also ein anderes, aber zumindest im Wesentlichen baugleiches Flugzeug. Die vorbekannten Messdaten können insbesondere als Schadenshistorie bzw. Zustandshistorie des Flugzeugs verstanden werden. Letztlich sind die vorbekannten Messdaten vorzugsweise als ältere Messdaten zum Flugzeug zu verstehen. Beispielsweise kann auf Grundlage eines geometrischen Vergleichs von den Messdaten und den vorbekannten Messdaten Verzug und/oder Verformung des Flugzeugs erkannt werden, was dann als Schadensstelle detektiert wird.

Die Messdaten, ebenso die vorbekannten Messdaten und/oder die normierten Messdaten, können Informationen über die Anzahl und/oder die Anordnung von Stringern und/oder Spanten des Flugzeugs umfassen. Es ist möglich, dass sich die Drohne an baumusterbedingten/konstruktionsbedingten Flugzeugmerkmalen wie z.B. Stringern und/oder Spanten orientieren kann. Es hat sich nämlich herausgestellt, dass diese Merkmale des Flugzeugs besonders leicht und wenig fehleranfällig sensorisch als die bzw. in den Messdaten zu erfassen sind, wobei bei tatsächlichem Vorliegen von Schäden am Flugzeug die Messdaten entsprechende Schadensstellen recht leicht erkennen lassen.

Das Erfassen, das Senden und das Detektieren können zeitgleich durchgeführt werden. So kann möglichst in Echtzeit gearbeitet werden, um zeitnah bzw. nahezu in Echtzeit die Schadensstelle zu detektieren. Beispielsweise kann kontinuierlich erfasst werden, die Messdaten können direkt gesendet werden, und zugleich können die Messdaten direkt ausgewertet werden bzw. es kann detektiert werden. Beispielsweise kann nach dem Erfassen eines Schadens binnen kürzester Zeit, insbesondere Sekunden oder Minuten, die Schadensstelle detektiert werden.

Das Erfassen, das Senden und das Detektieren können, insbesondere mit zeitlichem Überlapp, nacheinander durchgeführt werden. Das Erfassen, das Senden und das Detektieren können wiederholt durchgeführt werden bzw. wiederholt werden. Es kann beispielsweise ein Zyklus aus Erfassen, Senden und Detektieren wiederholt werden. Beispielsweise ist es möglich, dass zunächst ein gewisser Teil des Flugzeugs oder das ganze Flugzeug (bzw. die relevanten Bereiche des Flugzeugs) erfasst wird, bis das Senden durchgeführt wird. Beispielsweise werden zunächst die Schritte Betreiben und Erfassen, vorzugsweise auch der Schritt Detektieren, abgeschlossen, bis der Schritt Senden vollzogen wird. Es ist auch möglich, dass erst das Erfassen des Flugzeugs vollständig durchgeführt bzw. abgeschlossen wird, um dann das Senden und/oder das Detektieren durchzuführen.

Es kann ein Verarbeiten der Messdaten und Speichern der Messdaten und/oder der Schadensstelle in einer Datenbank zur auf das Flugzeug bezogenen Schadensdokumentation vorgesehen sein. Die Datenbank kann insoweit mit neuen vorbekannten Messdaten gespeist werden. Die Datenbank kann mittels der Computereinrichtung bereitgestellt werden. Die Datenbank kann cloudbasiert bereitgestellt werden. Die Datenbank kann die Messdaten und insbesondere die vorbekannten Messdaten und/oder die normierten Messdaten bereitstellen bzw. aufweisen. Das Verarbeiten umfasst beispielsweise ein Glätten und/oder Bandpassfiltern von Messdaten, um wahrscheinliche Messungenauigkeiten zu entfernen. Die Messdaten können beispielsweise aggregiert und/oder gefiltert werden. Vorzugsweise wird ein Abbild des Flugzeugs oder wenigstens eines Teils des Flugzeugs in der Datenbank gespeichert bzw. in Form eines digitalen Zwillings abgebildet; diese Messdaten bzw. dieses Abbild kann/können später als vorbekannte Messdaten angezogen werden. Für eine gegen Veränderung abgesicherte historische Betrachtung von Messdaten können die Messdaten ggf. auf einer Blockchain abgespeichert werden. Eine Abbildung als digitaler Zwilling kann auf einer/der Blockchain erfolgen.

Es kann ein Einteilen des Flugzeugs in Risikozonen auf der Grundlage der Messdaten und/oder der Schadensstelle vorgesehen sein. Die Risikozonen sind insbesondere Flächenabschnitte bzw. Bereiche des Flugzeugs, die von dem unbemannten Luftfahrzeug erfassbar sind. Die Risikozonen können in der Datenbank abgespeichert werden. Beispielsweise können die Messdaten, insbesondere alternativ oder ergänzend die vorbekannten Messdaten und/oder die normierten Messdaten, ausgewertet werden, um die Einteilung in Risikozonen vorzunehmen. Eine Risikozone zeichnet sich insbesondere dadurch aus, dass in diesem Bereich des Flugzeugs wenigstens ein Mal eine Schadensstelle vorgelegen hat und/oder mit einer vorbestimmten Wahrscheinlichkeit eine Schadensstelle auftreten kann. Beispielsweise kann eine Vorderkannte einer Tragfläche eine Risikozone darstellen, weil hier vermehrt Vogelschlag auftreten kann, der die Oberfläche eindellen bzw. verformen kann. Beispielsweise kann es vorgesehen sein, dass das Verfahren in einer Variante nur in Bezug auf die Risikozonen durchgeführt wird, und dass das Verfahren in einer weiteren Variante nur abseits von den Risikozonen durchgeführt wird oder in den Risikozonen und in weiteren sich von den Risikozonen unterscheidenden Zonen des Flugzeugs durchgeführt wird.

Risikozonen können sich durch Herstellervorgaben ergeben. Des Weiteren kann aufgrund der verschiedenen Sensoren Abmaße von kritischen Flugzeugteilen über die Zeit verglichen werden, ob hier Änderung auftreten, welche auf konstruktions- oder produktionsbedingte Mängel hindeuten könnten. Dies könnten Deformierungen bzw. Auswölbungen sein, die bspw. Durch fehlende Bolzen oder Fügeverfahren (kleben, nieten, schrauben) unterschiedlicher Werkstoffe auftreten.

Es kann, insbesondere neben dem unbemannten Luftfahrzeug, ein weiteres unbemanntes Luftfahrzeug vorgesehen sein bzw. betrieben werden. Bei dem Verfahren können vorteilhaft mehrere Luftfahrzeuge betrieben werden, um eine Aufgabenteilung und/oder einen Zeitvorteil zu erreichen. Es kann so auch Energieverbrauch über die mehreren Luftfahrzeuge verteilt werden. Das (weitere) unbemannte Luftfahrzeug kann zum Markieren und/oder Reparieren des Flugzeugs, insbesondere einer Schadensstelle des Flugzeugs, ausgebildet sein. Es kann ein Markieren der Schadensstelle durch eine Markierungseinrichtung des unbemannten Luftfahrzeugs und/oder eines/des weiteren unbemannten Luftfahrzeugs vorgesehen sein. Es kann ein Reparieren und/oder Reinigen bzw. eine Reinigung der insbesondere markierten Schadensstelle durch ein Werkzeug des unbemannten Luftfahrzeugs und/oder eines/des weiteren unbemannten Luftfahrzeugs vorgesehen sein. Das (weitere) unbemannte Luftfahrzeug kann insoweit als Markierungsdrohne und/oder als Reparaturdrohne ausgebildet sein. Das (weitere) unbemannte Luftfahrzeug kann beispielsweise einen Arm, insbesondere Greifarm, aufweisen. Beim Markieren kann eine Schadensstelle optisch, insbesondere mittels Lichtstrahl und/oder Laserstrahl, und/oder durch aufgebrachtes Material, insbesondere mittels Farbmarkierung oder dergleichen, markiert werden. Beim Reparieren kann die Schadensstelle mechanisch instand gesetzt werden, insbesondere mittels Werkzeug der Reparaturdrohne. Das (weitere) unbemannte Luftfahrzeug, insbesondere die Reparaturdrohne, kann auch zur Reinigung, beispielsweise von Sensoren, und/oder zum Austausch von Verschleißteilen und/oder zur Überprüfung der Funktionalität von Bauteilen, insbesondere jeweils des Flugzeugs, ausgebildet sein.

Es ist möglich, dass eine oder mehrere Markierungen für Distanzmessungen bzw. Messungen von Verformungen des Flugzeugs verwendet werden, beispielsweise nach erfolgter Reinigung und/oder Reparatur. Distanzmessungen können als Qualitätsmerkmal hinsichtlich einer erfolgten Reparatur oder möglicher nächster Reparaturen verwendet werden.

Insoweit vorliegend vom "Luftfahrzeug" bzw. synonym dem "unbemanntem Luftfahrzeug" die Rede ist, kann sowohl das "unbemannte Luftfahrzeug" (also insbesondere das, das zum Erfassen verwendet wird) als auch das "weitere unbemannte Luftfahrzeug" gemeint sein; es können auch beide gemeint sein. Es ist also denkbar, dass optional jedes der vorliegend genannten Luftfahrzeuge bzw. unbemannten Luftfahrzeuge bei den hier beschriebenen vorteilhaften Ausgestaltungen der Erfindung gemeint ist.

Es kann ein Erzeugen eines Modells zur Vorhersage einer Reparaturzeit der Schadensstelle und/oder eines nächstmöglichen Einsatzzeitpunkts des Flugzeugs auf der Grundlage der Messdaten und/oder der Schadensstelle vorgesehen sein. Es kann ein Vorhersagen einer Reparaturzeit der Schadensstelle und/oder eines/des nächstmöglichen Einsatzzeitpunkts des Flugzeugs mittels eines/des Modells zur Vorhersage vorgesehen sein. Das Verfahren kann also vorsehen, dass ein Prognosemodell aufgestellt wird, das anhand der Schadensstelle bzw. deren Messdaten eine Prognose bezüglich einer Instandsetzung bzw. Instandsetzungszeit aufstellt. Insbesondere ist mittels des Modells zur Vorhersage vorgesehen, dass der jeweiligen detektieren Schadensstelle zugeordnet wird, wie lange eine Reparatur dauert und/oder wie eine/die Reparatur durchgeführt wird. Die Reparatur kann beispielsweise mittels des (weiteren) unbemannten Luftfahrzeugs vorgesehen sein bzw. geplant werden oder auf andere Weise. Das Modell zur Vorhersage ist beispielsweise ein mathematisches Modell. Das Erzeugen kann wenigstens teilweise oder vollständig computerimplementiert erfolgen. Das Erzeugen kann auch in Verbindung damit geschehen, dass Erfahrungswerte bzw. Expertenwissen eingegeben und/oder abgefragt werden.

Es kann ein Erlernen des Flugzeugs vorgesehen sein. Das Erlernen kann mittels des unbemannten Luftfahrzeugs durchgeführt werden. Das Erlernen geschieht vorzugsweise durch Erfassen von Messdaten über das Flugzeug. Das Erlernen dient insbesondere zum Planen einer auf das Flugzeug bezogenen Flugbahn für das Luftfahrzeug und/oder das weitere Luftfahrzeug.

Des Weiteren dient das Erlernen insbesondere zum Detektieren von Flugzeugschäden und/oder Schadensstellen. Insbesondere können Schadensstellen erlernt werden. Es können Messdaten über Schadensstellen aus einem trainierten Algorithmus bzw. mittels KI-Algorithmen (insbesondere KI-Modell, Machine Learning, Deep Learning und/oder künstliches neuronales Netz) verwendet werden. Diese Daten können von unterschiedlichen Flugzeugmustern stammen und für die Detektion bzw. das Detektieren von Schadensstellen bei einem gerade erlernten bzw. eingelernten Flugzeug verwendet werden.

Das Erlernen kann sich auf ein komplett unbekanntes bzw. neues Baumuster bzw. einen solchen Typ eines Flugzeugs beziehen. Es kann ein Flugzeug erlernt werden, bei dem Baumuster/Typ bereits bekannt ist (insbesondere im Algorithmus), insbesondere jedoch zweckbestimmte Modifikationen/Aufbauten vorhanden sind und mit erlernt werden. Es kann ein Flugzeug mit bekanntem Baumuster/Typ das erste Mal erfasst werden und alle zu diesem Zeitpunkt physisch vorhanden Schadensstellen bzw. Schäden jeglicher Art bzw. Anomalien (bspw. eine Verformung von Bauteilen durch fehlende Befestigung, übermäßige Beanspruchung o.ä. ) detektiert, erfasst, gespeichert und/oder klassifiziert werden. Von dem Flugzeug kann insbesondere ein digitaler Zwilling erstellt werden.

Es kann ein Erlernen eines sich vom Flugzeug unterscheidenden weiteren Flugzeugs vorgesehen sein. Das Erlernen kann mittels des unbemannten Luftfahrzeugs durchgeführt werden. Das Erlernen geschieht vorzugsweise durch Erfassen von Messdaten über das weitere Flugzeug. Das Erlernen dient insbesondere zum Planen einer auf das weitere Flugzeug bezogenen Flugbahn für das Luftfahrzeug und/oder das weitere Luftfahrzeug. Beim Erlernen wird insbesondere ein digitaler Zwilling bzw. ein Abbild des weiteren Flugzeugs erstellt. Es werden beispielsweise Abmaße bestimmt. Anders gesagt, beispielsweise, können fremde Flugzeugmuster durch Erfassen eines fremden Flugzeugs angelernt werden. Das schafft Autonomie des Verfahrens.

Es kann ein Planen einer auf das Flugzeug bezogenen Flugbahn für das Luftfahrzeug und/oder das weitere Luftfahrzeug vorgesehen sein, um das Luftfahrzeug und/oder das weitere Luftfahrzeug längs dieser Flugbahn zu betreiben. Es kann ein Planen einer Flugbahn des (weiteren) unbemannten Luftfahrzeugs vorgesehen sein. Die Flugbahn betrifft bevorzugt einen Kurs des (weiteren) unbemannten Luftfahrzeugs insbesondere bezüglich des (weiteren) Flugzeugs. Beispielsweise erstreckt sich die Flugbahn längs der Risikozonen am Flugzeug und/oder in einem vorbestimmten Abstand zum Flugzeug. Die Flugbahn kann auch eine Information zur Orientierung des (weiteren) unbemannten Luftfahrzeugs längs der Flugbahn und/oder in Bezug auf das Flugzeug umfassen.

Bei einem Verband von und/oder mehreren unbemannten Luftfahrzeugen kann bspw. ein unbemanntes Luftfahrzeug zum Erfassen bzw. Detektieren von Schadensstellen, Schäden bzw. Anomalien vorhanden sein, welches dann neben dem Erfassen bzw. Detektieren auch die Messdaten bzw. Schadensstellen zur Orientierung für die anderen im Verband sich befindlichen unbemannten Luftfahrzeuge sendet. Dazu kann auch ein unbemanntes Luftfahrzeug zur Markierung von Schadensstellen, insbesondere mittels Laser (bspw. Beschriftungslaser), Farbmarkierungen und/oder Schaumstoff, vorgesehen sein. Eine Markierung kann dadurch dauerhaft und/oder zeitlich begrenzt erfolgen. Alle im Verband befindlichen unbemannten Luftfahrzeuge können sich anhand von Markierungen orientieren. Ebenso können Markierungen dazu verwendet werden, dass eine Reparatur an einem anderen Ort erfolgt, als dort, wo die Schadensstelle, der Schaden bzw. die Anomalie detektiert/erfasst wurde.

So kann bspw. auch ein unbemanntes Luftfahrzeug, insbesondere eine Markierungsdrohne, einen Schaden mittels einer Visualisierung (z.B. lichtbasiert, insbesondere mittels LED) einem Menschen (insbesondere einem Techniker) aufzeigen, um eine Reparatur an einem anderen Ort durchzuführen (z.B. Außenstation, Hangar, Flughafen in anderem Land etc.). Die ortsunabhängige Reparatur ist möglich, weil die Computereinrichtung Daten übermitteln bzw. senden kann, auf deren Basis die Reparatur vollzogen werden kann. Somit kann die Detektion und das Markieren unabhängig von der Reparatur erfolgen. Gerade wenn die Reparatur nicht mit einer Reparaturdrohne aufgrund des Schadenbildes erfolgen kann (bspw. Wechsel von größeren Bauteilen ist notwendig), ist diese Ausgestaltung zweckmäßig.

Das unbemannte Luftfahrzeug kann sich in einigen oder allen Innenbereichen eines Flugzeuges bewegen, welche zugänglich sind bzw. gemacht werden können (bspw. in einem Frachtflugzeug, in einem Passagierflugzeug und/oder in einem Militärflugzeug) und hier Schadensstellen bzw. Schäden/Anomalien erfassen bzw. detektieren. Bewegliche Bauteile des Flugzeugs können mittels Frequenzmessungen (bspw. Noise Sensoren) auf Schäden/Anomalien untersucht werden und insbesondere kann die Position markiert werden.

Es kann ein Kommunizieren, insbesondere während des Betreibens und/oder vor dem Betreiben, mit einem Flughafenkontrollsystem eines Flughafens vorgesehen sein. Das Kommunizieren ist insbesondere zum Betreiben des unbemannten Luftfahrzeugs und/oder des weiteren unbemannten Luftfahrzeugs außerhalb eines Hangars an dem Flughafen vorgesehen. Bei diesem Kommunizieren kann sich das (weitere) unbemannte Luftfahrzeug beim Flughafenkontrollsystem anmelden bzw. erkenntlich zeigen. Das (weitere) unbemannte Luftfahrzeug kann Befehle empfangen und/oder Erlaubnisse einholen und/oder Identifikationsmerkmale, insbesondere einen Ort und/oder eine Flughöhe des unbemannten Luftfahrzeugs, übermitteln. Das Kommunizieren soll einen möglichst automatisiertes, zeitsparendes und sicheres Betreiben ermöglichen.

Weiter wird ein System zur Inspektion eines Flugzeugs vorgeschlagen, das System umfassend ein unbemanntes Luftfahrzeug, ein weiteres unbemanntes Luftfahrzeug und/oder eine Computereinrichtung, wobei das System ausgebildet ist zur Durchführung des hier beschriebenen Verfahrens. Das System ist insbesondere eingerichtet, um die erfindungsgemäßen Verfahrensschritte auszuführen.

Im Rahmen der Offenbarung steht die Abkürzung "bzw." als eine Kurzform für "beziehungsweise" und soll grundsätzlich alternative, gleichwertige und/oder synonyme Merkmale oder Begriffe angeben, um die Idee bzw. den Sinn einer Merkmals- oder Begriffsverwendung näher zu bringen. "Bzw." kann stets mit "und/oder" ersetzt werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: ein System zur Inspektion eines Flugzeugs in schematischer Ansicht;
- Fig. 2: ein Verfahren zur Inspektion eines Flugzeugs in schematischer Ansicht;
- Fig. 3: ein System zur Inspektion eines Flugzeugs in schematischer Ansicht.

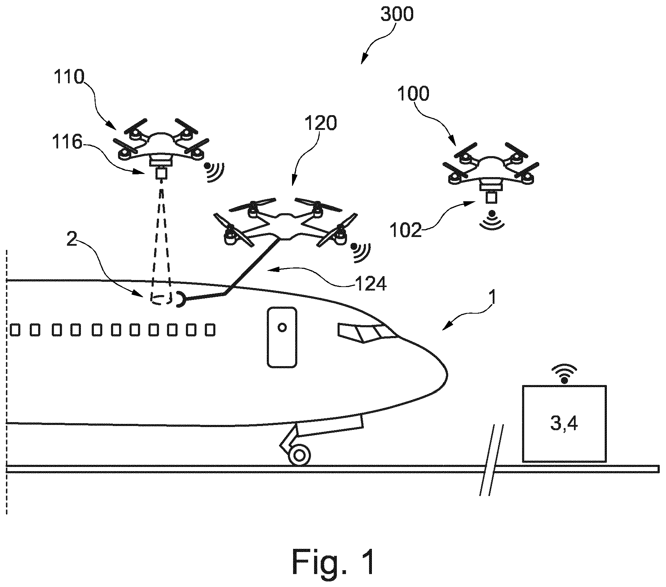

Fig. 1 zeigt ein erfindungsgemäßes System 300 zur Inspektion eines Flugzeugs 1 an einem Flughafen. Das Flugzeug 1, von dem ein vorderer Abschnitt ersichtlich ist, steht abseits vom Hangar insbesondere unter freiem Himmel und/oder in der Nähe vom Rollfeld. Am Flugzeug 1 werden drei unbemannte Luftfahrzeuge 100, 110 und 120 betrieben. Die drei Luftfahrzeuge 100, 110, 120 führen Arbeitsteilung untereinander durch, im Grunde um eine Schadensstelle 2 an dem Flugzeug 1 zu detektieren (das macht das Luftfahrzeug 100 in Zusammenarbeit mit einer Computereinrichtung 3), die Schadensstelle 2 zu markieren (das macht das weitere Luftfahrzeug 110), und um die Schadensstelle 2 zu reparieren (das macht das weitere Luftfahrzeug 120).

Das Luftfahrzeug 100 erfasst Messdaten des Flugzeugs 1 mittels seiner Sensorik 102. Die Sensorik 102 umfasst einen Ortungssensor, eine Kamera, einen Lidar-Sensor und einen SMAT-3D-Sensor. Das Luftfahrzeug 100 kann die Messdaten an die Computereinrichtung 3 senden. Die Computereinrichtung 3 kann die Schadensstelle 2 detektieren, die Messdaten verarbeiten und die Schadensstelle 2 und die verarbeiteten Messdaten in einer Datenbank 3 zur Schadensdokumentation abspeichern. Es ist auch möglich, dass das Luftfahrzeug 100 selbst die Schadensstelle 2 detektiert bzw. erkennt.

Dem weiteren unbemannten Luftfahrzeug 110 kann die Schadensstelle 2 bzw. deren Position am Flugzeug 1 mitgeteilt werden, insbesondere mittels der Computereinrichtung 3 und/oder mittels des unbemannten Luftfahrzeugs 100.

Das weitere unbemannte Luftfahrzeug 110 kann zur Schadensstelle 2 fliegen. Das weitere unbemannte Luftfahrzeug 110 kann mittels seiner Markierungseinrichtung 116 mit einem Laserstrahl und/oder Lichtstrahl und/oder aufgebrachtem Material, wie einer Farbmarkierung, die Schadensstelle 2 markieren.

Vorliegend projiziert das weitere unbemannte Luftfahrzeug 110 eine Markierung an der Schadensstelle 2, so dass die Schadensstelle 2 gut erkennbar ist, insbesondere vom weiteren unbemannten Luftfahrzeug 120.

Es ist alternativ oder ergänzend möglich, dass das weitere unbemannte Luftfahrzeug 110 und/oder 120 eine Markierung an der Schadensstelle 2 anbringt, beispielsweise Material, wie eine Farbmarkierung und/oder Lack, aufbringt. Insbesondere kann so die Schadensstelle 2 gut erkennbar sein, insbesondere vom weiteren unbemannten Luftfahrzeug 120 und/oder anderen Luftfahrzeugen 100, 110 und/oder von Personal. Beispielsweise wird die Markierung neben der Schadensstelle 2 angebracht.

Das weitere unbemannte Luftfahrzeug 120 kann die insbesondere markierte Schadensstelle 2 erkennen und mit seinem Werkzeug 124 reparieren. Beispielsweise wird, um die Schadensstelle 2 wenigstens teilweise bzw. ansatzweise zu reparieren, Lack auf das Flugzeug 1 aufgesprüht, ein Teil des Flugzeugs 1 ausgetauscht, ein Fremdkörper vom Flugzeug 1 entfernt und/oder das Flugzeug 1 gereinigt.

Es ist alternativ oder ergänzend möglich, dass die Markierung und/oder der Lack nach der Reparatur bzw. dem Reparieren und/oder nach der Reinigung bzw. dem Reinigen entfernt wird, insbesondere durch das weitere unbemannte Luftfahrzeug 110 und/oder 120 und/oder von Personal. Es ist auch möglich, dass die Markierung bei der oder durch die Reinigung bzw. Reparatur entfernt wird. Schließlich ist es auch möglich, dass die Markierung am Flugzeug 1 verbleibt, damit nachvollziehbar ist, dass etwas und/oder wo etwas repariert bzw. gereinigt wurde.

Es findet das Speichern der reparierten bzw. gereinigten Schadensstelle 2 in einer Datenbank zur auf das Flugzeug 1 bezogenen Schadensdokumentation statt. Es kann insoweit eine Eintragung der erfolgten Reparatur bzw. Reinigung in einem dem Flugzeug 1 zugeordneten computerimplementierten Logbuch bzw. Wartungssystem vorgesehen sein.

Die Computereinrichtung 3 befindet sich abseits vom Flugzeug 1, insbesondere cloudbasiert und/oder als Einrichtung am Flughafen und/oder in einer Zentrale. Die Computereinrichtung 4 stellt die Datenbank 3 bereit. Die Computereinrichtung 3 kommuniziert mit allen drei Luftfahrzeugen 100, 110 und 120 und optional mit dem Flughafenkontrollsystem.

Möglich ist es, dass die Luftfahrzeuge 100, 110 und/oder 120 untereinander kommunizieren, beispielsweise um Kollisionen zu vermeiden, um Messdaten zu übertragen, um den Abschluss eines oder mehrerer Verfahrensschritte abzuwarten, um die Schadensstelle 2 bzw. deren Position am Flugzeug 1 zu übertragen und/oder dergleichen.

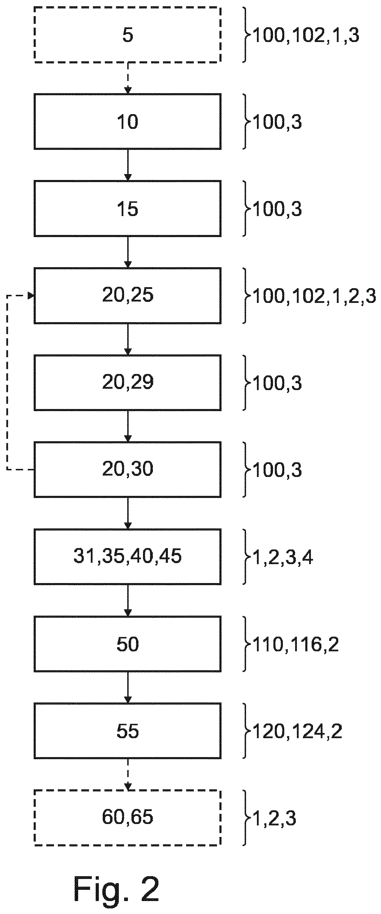

Fig. 2 zeigt ein computerimplementiertes Verfahren zur Inspektion des Flugzeugs 1 in schematischer Darstellung. Das Flugzeug 1 befindet sich beispielsweise an einem Flughafen, vgl. auch Fig. 1. Das Flugzeug 1 kann sich innerhalb oder außerhalb eines Hangars des Flughafens befinden. Das Verfahren sieht vor, dass ein unbemanntes Luftfahrzeug 100 verwendet wird, beispielsweise eine Drohne. Ferner ist eine Computereinrichtung 3 vorgesehen, die vom unbemannten Luftfahrzeug 100 separat angeordnet ist. Das Verfahren umfasst eine Vielzahl von Schritten.

Optional findet zunächst ein Erlernen 5 des Flugzeugs 1 statt, um eine Flugbahn für das unbemannte Luftfahrzeug 100 zu planen. Dabei erfasst das unbemannte Luftfahrzeug 100 das Flugzeug 1, indem es um das Flugzeug 1 herum fliegt und das Flugzeug 1 sensorisch, beispielsweise mittels einer Sensorik 102 des unbemannten Luftfahrzeugs 100, erfasst. Die Computereinrichtung 3 kann das unbemannte Luftfahrzeug 100 steuern oder überwachen.

Optional findet ein Erlernen 5 eines sich vom Flugzeug 1 unterscheidenden weiteren Flugzeugs durch Erfassen von Messdaten über das weitere Flugzeug zum Planen einer auf das weitere Flugzeug bezogenen Flugbahn für das unbemannte Luftfahrzeug 100 statt. Beispielsweise können mehrere Flugzeugtypen bzw. Flugzeugmuster erlernt werden.

Ferner ist ein Planen 10 einer auf das Flugzeug 1 bezogenen Flugbahn für das unbemannte Luftfahrzeug 100 vorgesehen, um das unbemannte Luftfahrzeug 100 längs dieser Flugbahn zu betreiben. Das Planen 10 erfolgt vorzugsweise mittels der Computereinrichtung 3.

Weiter ist optional ein Kommunizieren 15 mit einem Flughafenkontrollsystem des Flughafens zum Betreiben des unbemannten Luftfahrzeugs 100 außerhalb des Hangars an dem Flughafen vorgesehen. Dabei wird eine Freigabe eingeholt und/oder die Position, Geschwindigkeit und/oder Höhe des unbemannten Luftfahrzeugs 100 gemeldet. Das Kommunizieren 15 kann sich über mehrere oder alle Schritte des Verfahrens erstrecken und findet insbesondere während eines Betreibens statt. Das Kommunizieren 15 erfolgt vorzugsweise mittels der Computereinrichtung 3.

Weiter ist ein Betreiben 20 des unbemannten Luftfahrzeugs 100 im Bereich des Flugzeugs 1 vorgesehen. Das unbemannte Luftfahrzeug 100 wird um das Flugzeug 1 herum geflogen, insbesondere entlang der Flugbahn, wobei die Sensorik 102 auf das Flugzeug 1 gerichtet ist bzw. wird. Das Betreiben 20 erfolgt vorzugsweise mithilfe der Computereinrichtung 3.

Während des Betreibens 20 findet ein Erfassen 25 von Messdaten des Flugzeugs 1 durch die Sensorik 102 statt. Das Flugzeug wird mit einer Kamera visuell erfasst. Ferner wird das Flugzeug mit einem Lidar-Sensor und/oder mit einem SMAT-3D-Sensor erfasst. Dabei ist von Bedeutung, dass alle Schadensstellen 2 des Flugzeugs 1 erfasst bzw. in den Messdaten erkennbar erfasst werden. Die Schadensstellen 2 befindet sich typischerweise an der Außenhaut des Flugzeugs und/oder sind dort ersichtlich. Die Schadensstellen 2 können auch innere Strukturen des Flugzeugs betreffen. Die Messdaten enthalten Informationen zu den Schadensstellen 2.

Im Schritt Verschlüsseln 29 werden die Messdaten von bzw. auf dem unbemannten Luftfahrzeug 100 verschlüsselt. Dies erfolgt während des Betreibens 20 des unbemannten Luftfahrzeugs 100. Das Betreiben erfolgt bevorzugt mithilfe der Computereinrichtung 3.

Anschließend, während des Betreibens 20, erfolgt ein Senden 30 der verschlüsselten Messdaten an die Computereinrichtung 3 mittels eines drahtlosen Kommunikationsverfahrens, insbesondere mittels 5G-Mobilfunktechnologie. Die Computereinrichtung 3 empfängt die verschlüsselten Messdaten nahezu verzögerungsfrei und im Flug des unbemannten Luftfahrzeugs 100. Das unbemannte Luftfahrzeug 100 kann erneut mit dem Schritt Erfassen 25 fortfahren bzw. zu diesem zurückkehren. Das Erfassen 25 kann so lange durchgeführt werden, bis das Flugzeug 1 teilweise oder zumindest näherungsweise vollständig erfasst worden ist.

Nun erfolgt ein Entschlüsseln 31 der verschlüsselten Messdaten mittels der Computereinrichtung 3. Weiter erfolgt ein Detektieren 35 wenigstens einer Schadensstelle 2 des Flugzeugs 1 auf Grundlage der Messdaten mittels der Computereinrichtung 3.

Die Computereinrichtung 3 stellt einen Algorithmus für das Detektieren 35 bereit. Der Algorithmus setzt insbesondere Prinzipien künstlicher Intelligenz um, beispielsweise Machine Learning. Der Algorithmus ist mit Referenzdaten zu vorbekannten Schadenstellen trainiert worden. Das Detektieren 35 umfasst einen Vergleich der Messdaten mit vorbekannten Messdaten über das Flugzeug 1, um bei einer Abweichung die Schadenstelle 2 zu identifizieren. Die Messdaten umfassen Informationen über die Anzahl und/oder die Anordnung von Stringern und/oder Spanten des Flugzeugs 1.

Das Erfassen 25, das Senden 30 und das Detektieren 25 finden im Grunde zeitgleich statt.

Denkbar ist es, dass das Senden 30 und/oder das Detektieren 35 im Anschluss an das Erfassen 25 bzw. Betreiben 20 durchgeführt werden. Beispielsweise wird das unbemannte Luftfahrzeug 100 nach dem Erfassen 25 gelandet, z.B. zum Beenden des Betreibens 20, um im Anschluss daran zu den Schritten Senden 30 bzw. Detektieren 35 zu kommen.

Im Schritt Verarbeiten 40 werden die Messdaten mittels der Computereinrichtung 3 gefiltert und in einer Datenbank 4 zur auf das Flugzeug 1 bezogenen Schadensdokumentation gespeichert. Im Schritt Einteilen 45 wird das Flugzeug 1 auf der Grundlage der Messdaten und der Schadensstelle 2 in Risikozonen eingeteilt.

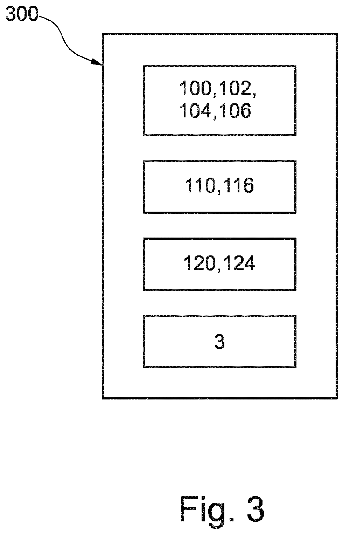

Wenn das Betreiben 20 abgeschlossen ist, alternativ oder ergänzend noch während des Betreibens 20, können Schadensstellen 2 markiert werden. Hierzu ist ein Schritt Markieren 50 vorgesehen. Das Markieren 50 erfolgt durch eine Markierungseinrichtung 116 eines weiteren unbemannten Luftfahrzeugs 110, insbesondere einer weiteren Drohne, das einen Lichtstrahl oder Laserstrahl auf eine jeweilige Schadensstelle 2 aussendet, um diese vorübergehend zu kennzeichnen. Schließlich kann ein Reparieren 55 und/oder Reinigen der markierten Schadensstelle 2 durch ein Werkzeug 124 eines weiteren unbemannten Luftfahrzeugs 120, insbesondere einer weiteren Drohne, erfolgen. Hier sei exemplarisch auf die Fig. 3 verwiesen, in der das weitere Luftfahrzeug 110 eine Markierungsdrohne mit der Markierungseinrichtung 116 und das weitere Luftfahrzeug 120 eine Reparaturdrohne mit dem Werkzeug 124 sind.

Ferner kann ein Erzeugen 60 eines Modells zur Vorhersage einer Reparaturzeit der Schadensstelle 2 und eines nächstmöglichen Einsatzzeitpunkts des Flugzeugs 1 auf der Grundlage der Messdaten und/oder der Schadensstelle 2 vorgesehen sein. Ferner kann ein Vorhersagen 65 der Reparaturzeit und des Einsatzzeitpunktes mittels des Modells zur Vorhersage erfolgen. Insbesondere betreffen solche Vorhersagen Schadensstellen 2, die nicht mittels einer Reparaturdrohne repariert werden können. Es ist aber auch möglich, dass die Vorhersagen Schadensstellen betreffen, die mittels einer Reparaturdrohne repariert werden können. Das Erzeugen 60 und/oder Vorhersagen 65 erfolgt vorzugsweise mithilfe der Computereinrichtung 3.

Fig. 3 zeigt ein System 300 zur Inspektion eines Flugzeugs. Das System 300 umfasst ein unbemanntes Luftfahrzeug 100, zwei weitere unbemannte Luftfahrzeuge 110 und 120, und eine Computereinrichtung 3. Das System 300 ist ausgebildet zur Durchführung des vorbeschriebenen Verfahrens. Das unbemannte Luftfahrzeug 100 weist eine Sensorik 102, ein Werkzeug 104 und eine Markierungseinrichtung 106 auf. Eines der weiteren unbemannten Luftfahrzeuge 110 weist eine Markierungseinrichtung 116 auf. Das andere der weiteren unbemannten Luftfahrzeuge 120 weist ein Werkzeug 124 auf. Die Computereinrichtung 3 kann mit allen Luftfahrzeugen 100, 110 und 120 und einem Flughafenkontrollsystem, insbesondere bidirektional und/oder verschlüsselt, kommunizieren.

### Bezugszeichenliste

- 1: Flugzeug
- 2: Schadensstelle
- 3: Computereinrichtung
- 4: Datenbank

- 5: Erlernen
- 10: Planen
- 15: Kommunizieren
- 20: Betreiben
- 25: Erfassen
- 29: Verschlüsseln
- 30: Senden
- 31: Entschlüsseln
- 35: Detektieren
- 40: Verarbeiten
- 45: Einteilen
- 50: Markieren
- 55: Reparieren
- 60: Erzeugen
- 65: Vorhersagen

- 100: Luftfahrzeug
- 102: Sensorik
- 104: Werkzeug
- 106: Markierungseinrichtung

- 110: weiteres Luftfahrzeug
- 116: Markierungseinrichtung

- 120: weiteres Luftfahrzeug
- 124: Werkzeug

## Patentansprüche

1. Computerimplementiertes Verfahren zur Inspektion eines Flugzeugs (1), umfassend
Betreiben (20) eines unbemannten Luftfahrzeugs (100) im Bereich des Flugzeugs (1),
Erfassen (25) von Messdaten des Flugzeugs (1) durch eine Sensorik (102) des unbemannten Luftfahrzeugs (100),
Senden (30) der Messdaten an eine von dem unbemannten Luftfahrzeug (100) separate Computereinrichtung (3) mittels eines drahtlosen Kommunikationsverfahrens,
Detektieren (35) wenigstens einer Schadensstelle (2) des Flugzeugs (1) auf Grundlage der Messdaten,
Markieren (50) der Schadensstelle (2) durch eine Markierungseinrichtung (106, 116) des unbemannten Luftfahrzeugs (100) und/oder eines weiteren unbemannten Luftfahrzeugs (110, 120), und
Reparieren (55) und/oder Reinigen der Schadensstelle (2) durch ein Werkzeug (104, 124) des unbemannten Luftfahrzeugs (100) und/oder des weiteren unbemannten Luftfahrzeugs (110, 120).

2. Verfahren nach dem voranstehenden Anspruch, wobei die Sensorik (102)
einen Ortungssensor aufweist, und
eine Kamera, einen Lidar-Sensor und/oder einen 3D-Sensor aufweist.

3. Verfahren nach einem der voranstehenden Ansprüche, wobei das Detektieren (35) wenigstens teilweise durch das unbemannte Luftfahrzeug (100) durchgeführt wird und die wenigstens eine Schadensstelle (2) danach an die Computereinrichtung (3) gesendet wird.

4. Verfahren nach einem der voranstehenden Ansprüche, wobei das unbemannte Luftfahrzeug (100) und die Computereinrichtung (3) zur bidirektionalen Kommunikation miteinander mittels des drahtlosen Kommunikationsverfahrens ausgebildet sind, und das Verfahren umfassend
Verschlüsseln (29) der Messdaten vor dem Senden (30) und
Entschlüsseln (31) der Messdaten nach dem Senden (30).

5. Verfahren nach einem der voranstehenden Ansprüche, wobei
das unbemannte Luftfahrzeug (100) und/oder die Computereinrichtung (3) einen Algorithmus für das Detektieren (35) bereitstellt und das Detektieren (35) mithilfe von Machine Learning Algorithmen und/oder Deep Learning Algorithmen und/oder der Verwendung eines neuronalen Netzes durchgeführt wird, das mit Referenzdaten zu vorbekannten Schadenstellen trainiert worden ist; und/oder
das Detektieren (35) einen Vergleich der Messdaten mit vorbekannten Messdaten über das Flugzeug (1) umfasst, um bei einer Abweichung die Schadenstelle (2) zu identifizieren,

6. Verfahren nach einem der voranstehenden Ansprüche,
wobei die Messdaten Informationen über die Anzahl und/oder die Anordnung von Stringern und/oder Spanten des Flugzeugs (1) umfassen.

7. Verfahren nach einem der voranstehenden Ansprüche, wobei
das Erfassen (25), das Senden (30) und das Detektieren (35) zeitgleich und/oder wiederholt nacheinander durchgeführt werden.

8. Verfahren nach einem der voranstehenden Ansprüche, umfassend
Verarbeiten (40) der Messdaten und Speichern der Messdaten und der Schadensstelle (2) in einer Datenbank (4) zur auf das Flugzeug (1) bezogenen Schadensdokumentation.

9. Verfahren nach einem der voranstehenden Ansprüche, umfassend
Einteilen (45) des Flugzeugs (1) in Risikozonen auf der Grundlage der Messdaten und/oder der Schadensstelle (2).

10. Verfahren nach einem der voranstehenden Ansprüche, wobei
das Markieren (50) der Schadensstelle (2) durch die Markierungseinrichtung (106, 116) des unbemannten Luftfahrzeugs (100) und/oder des weiteren unbemannten Luftfahrzeugs (110, 120) durch aufgebrachtes Material erfolgt, und
das unbemannte Luftfahrzeug (100) und das weitere unbemannte Luftfahrzeug (110, 120) zeitgleich oder nacheinander betrieben werden.

11. Verfahren nach einem der voranstehenden Ansprüche, wobei
das Reparieren (55) und/oder Reinigen der markierten Schadensstelle (2) durch ein Werkzeug (104, 124) des unbemannten Luftfahrzeugs (100) und/oder des weiteren unbemannten Luftfahrzeugs (110, 120) erfolgt, und
das unbemannte Luftfahrzeug (100) und das weitere unbemannte Luftfahrzeug (110, 120) zeitgleich oder nacheinander betrieben werden.

12. Verfahren nach einem der voranstehenden Ansprüche, umfassend
Erzeugen (60) eines Modells zur Vorhersage einer Reparaturzeit der Schadensstelle (2) und/oder eines nächstmöglichen Einsatzzeitpunkts des Flugzeugs (1) auf der Grundlage der Messdaten und/oder der Schadensstelle (2), und/oder
Vorhersagen (65) einer Reparaturzeit der Schadensstelle (2) und/oder eines nächstmöglichen Einsatzzeitpunkts des Flugzeugs (1) mittels eines/des Modells zur Vorhersage.

13. Verfahren nach einem der voranstehenden Ansprüche, umfassend
Erlernen (5) eines sich vom Flugzeug (1) unterscheidenden weiteren Flugzeugs durch Erfassen von Messdaten über das weitere Flugzeug (1) zum Planen einer auf das weitere Flugzeug bezogenen Flugbahn für das unbemannte Luftfahrzeug (100) und/oder das weitere Luftfahrzeug (110, 120), und/oder
Planen (10) einer auf das Flugzeug (1) bezogenen Flugbahn für das unbemannte Luftfahrzeug (100) und/oder das weitere unbemannte Luftfahrzeug (110, 120), um das unbemannte Luftfahrzeug (100) und/oder das weitere unbemannte Luftfahrzeug (110, 120) längs dieser Flugbahn zu betreiben.

14. Verfahren nach einem der voranstehenden Ansprüche, umfassend
Kommunizieren (15), während des und/oder vor dem Betreiben(s) (20), mit einem Flughafenkontrollsystem eines Flughafens zum Betreiben (20) des unbemannten Luftfahrzeugs (100) und/oder des weiteren unbemannten Luftfahrzeugs (110, 120) außerhalb eines Hangars an dem Flughafen.

15. System (300) zur Inspektion eines Flugzeugs (1), umfassend ein unbemanntes Luftfahrzeug (100) und/oder eine Computereinrichtung (3), wobei das System (300) ausgebildet ist zur Durchführung des Verfahrens nach einem der voranstehenden Ansprüche; und optional umfassend wenigstens ein weiteres unbemannte Luftfahrzeug (110, 120).
